# EUROPEAN PATENT SPECIFICATION

(11) **EP 3 421 803 B1**
(45) Date of publication and mention of the grant of the patent: **29.01.2020**
(21) Application number: 17815303.7
(22) Date of filing: 16.06.2017
(51) Int. Cl.: F04C 29/00, F04B 39/16, F01C 19/00, F04B 27/10, F04B 39/02, F04C 29/02, F16C 33/66, F04C 27/00, F04C 18/02, F16C 33/10

(54) **OPEN-TYPE COMPRESSOR**
OFFENER VERDICHTER
COMPRESSEUR DE TYPE OUVERT

(30) Priority: 24.06.2016 JP 2016125995
(43) Date of publication of application: 02.01.2019
(73) Proprietor: Mitsubishi Heavy Industries Thermal Systems, Ltd., Tokyo 108-8215 (JP)
(72) Inventor: SATO Hajime, Tokyo 108-8215 (JP); MIYAMOTO Yoshiaki, Tokyo 108-8215 (JP); KIMATA Yoshiyuki, Tokyo 108-8215 (JP)
(74) Representative: Cabinet Beau de Loménie
(86) International application number: PCT/JP2017/022350
(87) International publication number: WO 2017/221835

(56) References cited:
- EP-A1- 0 887 550
- EP-A2- 1 030 060
- JP-A- S5 564 172
- JP-A- H06 249 166
- JP-A- H09 170 553
- JP-U- H01 124 394
- US-A1- 2014 265 152

## Description

### Technical Field

The present invention relates to an open-type compressor including a compression mechanism which is housed in a housing, and a drive shaft which is coupled to the compression mechanism and of which one end portion protrudes to the exterior of the housing.

Priority is claimed on Japanese Patent Application No. 2016-125995, filed on June 24, 2016.

### Background Art

For example, in compressors including a scroll compression mechanism having a fixed scroll and an orbiting scroll, an open-type compressor including a compression mechanism which is housed in a housing, and a drive shaft which is coupled to the compression mechanism and of which one end portion protrudes to the exterior of the housing is known.

A housing of such an open-type compressor has a boss part surrounding one end portion of the drive shaft. A seal device, such as a mechanical seal for sealing a lubricant that fills the inside of the housing, is provided between the boss part and the drive shaft.

Incidentally, in an open-type compressor, there are cases where a lubricant leaks out from a seal device due to a seal member of the seal device which has been cured or has deteriorated with time resulting in degradation of a sealing function. Generally, a leaked lubricant falls on an inner peripheral surface of a boss part and is collected. However, there are cases where a leaked lubricant which has flowed along a surface of a drive shaft and then has adhered to an electromagnetic clutch or the like becomes a problem.

PTL 1 discloses a mechanism which causes oil flowing along a surface of a drive shaft to be splattered on a boss part side by a ring-shaped member provided in the drive shaft and to be collected.

### Citation List

### Patent Literature

[PTL 1] Japanese Unexamined Patent Application Publication No. 9-170553
EP0887550 discloses an open-type compressor according to the preamble of claim 1.

### Summary of Invention

### Technical Problem

However, in a mechanism disclosed in PTL 1, there is concern that a lubricant, which has been splattered above a drive shaft and has fallen again, adheres to the drive shaft again.

An object of the present invention is to provide an open-type compressor having a drive shaft of which one end portion protrudes from a housing. In the open-type compressor, a lubricant which has leaked out from a seal device can be prevented from flowing along a surface of the drive shaft and leaking out to the exterior of the housing.

### Solution to Problem

According to a first aspect of the present invention, there is provided an open-type compressor as defined by claim 1, including a housing which has a housing main body and a boss part integrally attached to the housing main body; a compression mechanism which is housed in the housing main body; a drive shaft which is coupled to the compression mechanism, of which an end portion on one side in an axial line direction protrudes to exterior of the housing main body, and of which the end portion is surrounded by the boss part; a seal device which seals a gap between the housing and the drive shaft; an annular plate which is provided on an outer peripheral surface of the drive shaft on one side of the seal device in the axial line direction and has a first gap between the plate and an inner peripheral surface of the boss part facing the drive shaft; and an annular oil adsorbent material which is provided on the inner peripheral surface of the boss part on one side of the plate in the axial line direction and has a second gap between the oil adsorbent material and the outer peripheral surface of the drive shaft.

According to the configuration, oil leaking out from the seal device and flowing along the outer peripheral surface of the drive shaft can be scattered on the boss part side by a centrifugal force of rotation of the drive shaft and the plate and then can be adsorbed by the oil adsorbent material. Accordingly, oil flowing along the outer peripheral surface of the drive shaft can be prevented from flowing to the exterior.

In the open-type compressor, an outer diameter of the plate may be greater than an inner diameter of the oil adsorbent material.

According to the configuration, oil which has been scattered due to rotation of the drive shaft and the plate can be more reliably adsorbed by the oil adsorbent material.

In the open-type compressor, the open-type compressor may have an oil discharge passage provided in the boss part, and an opening connecting the oil discharge passage and the inner peripheral surface of the boss part to each other. A position of an outer peripheral edge of the plate in the axial line direction of the drive shaft may be closer to the other side in the axial line direction than an end portion of an open range of the opening on one side in the axial line direction.

According to the configuration, oil can also be captured by the opening and the oil discharge passage, in addition to the oil adsorbent material.

In the open-type compressor, the position of the outer peripheral edge of the plate in the axial line direction of the drive shaft may be within the open range of the opening.

In the open-type compressor, the inner peripheral surface of the boss part may have a slit extending in a circumferential direction. An internal space of the slit may communicate with the opening.

According to the configuration, oil which has been scattered due to rotation of the drive shaft and the plate can be captured by the slit.

In the open-type compressor, a part in the vicinity of the outer peripheral edge of the plate on an outer side in a radial direction may be inclined toward the oil adsorbent material.

According to the configuration, a lubricant flowing along the outer peripheral surface of the drive shaft and then flowing along a surface facing the other side of the plate in the axial line direction due to a centrifugal force is likely to be scattered toward the oil adsorbent material disposed on one side of the plate in the axial line direction.

In the open-type compressor, the plate may be a snap ring which is capable of being fitted into a plate groove formed on the outer peripheral surface of the drive shaft.

According to the configuration, the plate can be easily attached to the drive shaft. In addition, the plate can be manufactured at low cost.

### Advantageous Effects of Invention

According to the present invention, oil leaking out from the seal device and flowing along the outer peripheral surface of the drive shaft can be scattered on the boss part side by a centrifugal force of rotation of the drive shaft and the plate and then can be adsorbed by the oil adsorbent material. Accordingly, oil flowing along the outer peripheral surface of the drive shaft can be prevented from flowing to the exterior.

### Brief Description of Drawings

Fig. 1 is a sectional view of an open-type compressor of a first embodiment of the present invention.
Fig. 2 is an enlarged sectional view of a part in the vicinity of a plate of the open-type compressor of the first embodiment of the present invention.
Fig. 3 is a plan view of the plate of the first embodiment of the present invention.
Fig. 4 is a sectional view describing an operation of the plate and an oil adsorbent material of the open-type compressor of the first embodiment of the present invention.
Fig. 5 is a sectional view describing an operation of the oil adsorbent material of the open-type compressor of the first embodiment of the present invention.
Fig. 6 is an enlarged sectional view of a part in the vicinity of a plate of an open-type compressor of a second embodiment of the present invention.
Fig. 7 is an enlarged sectional view of a part in the vicinity of a plate of an open-type compressor of a third embodiment of the present invention.
Fig. 8 is an enlarged sectional view of a part in the vicinity of a plate of an open-type compressor of a modification example of the third embodiment of the present invention.
Fig. 9 is an enlarged sectional view of a part in the vicinity of a plate of an open-type compressor of a fourth embodiment of the present invention.
Fig. 10 is an enlarged sectional view of a part in the vicinity of a plate of an open-type compressor of a fifth embodiment of the present invention.

### Description of Embodiments

### [First Embodiment]

Hereinafter, an open-type compressor 1 of a first embodiment of the present invention will be described in detail with reference to the drawings.

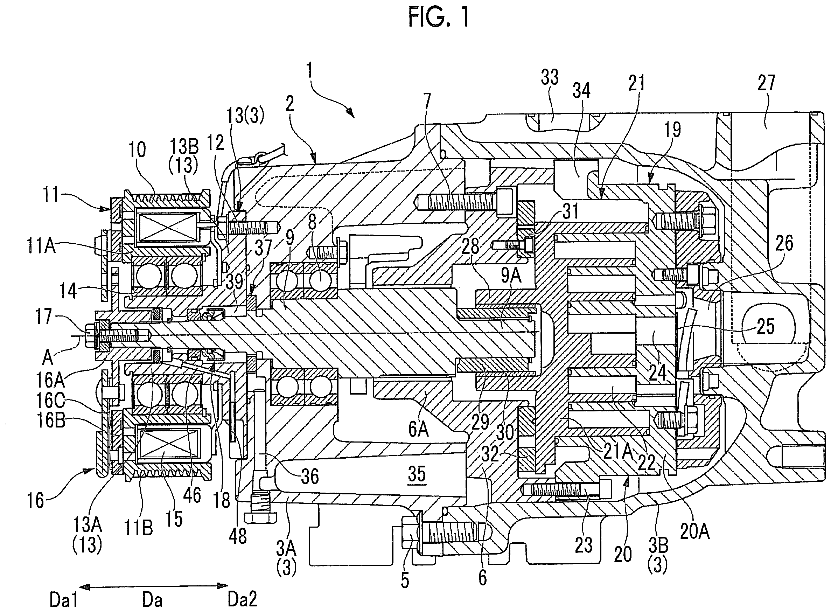

As illustrated in Fig. 1, the open-type compressor 1 includes a compression mechanism 19, a housing 2 housing the compression mechanism 19, and a drive shaft 9 coupled to the compression mechanism 19.

In the following description, a direction in which an axial line A of the drive shaft 9 extends is referred to as an axial line direction Da. In addition, a direction orthogonal to the axial line A is referred to as a radial direction, a side away from the axial line A in the radial direction is referred to as an outer side in the radial direction, and a side approaching the axial line A in the radial direction is referred to as an inner side in the radial direction. In the axial line direction Da, a side in a protruding direction of the drive shaft 9 is referred to as one side Da1 in the axial line direction (left side in Fig. 1), and the opposite side of the one side Da1 in the axial line direction is referred to as the other side Da2 in the axial line direction (right side in Fig. 1).

The housing 2 has a housing main body 3 housing the compression mechanism 19, and a boss part 13 integrally attached to the one side Da1 of the housing 2 in the axial line direction via a bolt 12.

The housing main body 3 has a front housing 3A and a rear housing 3B each having a bottomed shape. The front housing 3A and the rear housing 3B are integrally fastened to each other via a bolt 5.

A bearing member 6 is fixed to the other side Da2 in the axial line direction on the front housing 3A side inside the housing 2 via a bolt 7. The drive shaft 9 is rotatably supported by a radial bearing portion 6A of the bearing member 6 and a first antifriction bearing 8 installed inside the front housing 3A.

An end portion of the drive shaft 9 on the one side Da1 in the axial line direction penetrates the front housing 3A and protrudes to the exterior thereof. Power from an external driving source, such as an engine, is input to one end portion (protruding part) of the drive shaft 9 via a pulley 10 and an electromagnetic clutch 11.

The boss part 13 has a cylindrical boss part main body 13A coaxial with the drive shaft 9, and a flange part 13B formed on the other side Da2 of the boss part main body 13A in the axial line direction. The flange part 13B protrudes from the end portion of the boss part main body 13A on the other side Da2 in the axial line direction to the outer side in the radial direction. When the flange part 13B is fastened to the front housing 3A via the bolt 12, the boss part 13 is fixed to the housing 2.

In the present embodiment, the boss part 13 is fixed to the housing main body 3 using the bolt 12. However, the embodiment is not limited thereto. For example, the boss part 13 and the housing main body 3 may be integrally formed.

The electromagnetic clutch 11 has a rotor 11A rotationally driven by power from an external driving source such as an engine, an armature 16 disposed to face the rotor 11A, and an electromagnetic coil unit 15 causing the rotor 11A and the armature 16 to be magnetically adsorbed to each other.

The rotor 11A is annularly formed. An inner peripheral surface of the rotor 11A is rotatably supported by an outer peripheral surface of the boss part main body 13A via a second antifriction bearing 14. A belt groove 11B is formed on an outer peripheral surface of the rotor 11A. An outer peripheral surface 9B of the rotor 11A functions as the pulley 10.

The armature 16 has a tubular hub 16A with a flange part, a disk-shaped armature plate 16B formed of a magnetic body, and a leaf spring 16C. The hub 16A is fixed, via a bolt 17, to one end portion of the drive shaft 9 protruding to the exterior of the housing 2. The armature plate 16B is disposed to face an end surface of the rotor 11A. The leaf spring 16C biases the armature plate 16B in a direction away from the end surface of the rotor 11A.

In the electromagnetic coil unit 15, if a power supply is supplied from the exterior, an electromagnetic coil is energized and an electromagnetic force is generated, so that the armature plate 16B is magnetically adsorbed to the end surface of the rotor 11A against a biasing force of the leaf spring 16C. Accordingly, the rotor 11A and the armature 16 are joined to each other, a rotational force of the rotor 11A is transmitted to the armature 16 and is further transmitted to the drive shaft 9 of the open-type compressor 1, and thus the open-type compressor 1 operates.

On the other hand, if a power supply stops being supplied to the electromagnetic coil unit 15, the armature plate 16B is separated from the end surface of the rotor 11A due to a biasing force of the leaf spring 16C. Accordingly, a rotational force of the rotor 11A is blocked from being transmitted, and then the open-type compressor 1 stops.

The compression mechanism 19 is provided inside the housing 2 on the rear housing 3B side. Here, the compression mechanism 19 is a scroll compression mechanism including a pair of fixed scrolls 20, and an orbiting scroll 21. In the scroll compression mechanism 19, the pair of fixed scrolls 20 and the orbiting scroll 21 mesh with each other while being shifted in phase by 180°, and a plurality of compression chambers 22 are formed between both scrolls 20 and 21. Such a scroll compression mechanism itself is already known.

The fixed scroll 20 is fixed to the bearing member 6 via a bolt 23. An ejection cavity 26 is formed between a rear surface of an end plate 20A of the fixed scroll 20 and an inner surface of the rear housing 3B. An ejection port 24 for ejecting compressed gas into the ejection cavity 26, and an ejection valve 25 for opening and closing the ejection port 24 are provided in the end plate 20A of the fixed scroll 20.

A discharge port 27 ejecting compressed gas, which has been ejected into the ejection cavity 26, to the exterior is formed in the rear housing 3B. A discharge pipe constituting a refrigerating cycle can be connected to the discharge port 27.

A boss 28 is provided on a rear surface of an end plate 21A of the orbiting scroll 21. A crankpin 9A provided on the other side of the one side Da1 of the drive shaft 9 in the axial line direction is coupled to the boss 28 via a drive-bush 29 and an orbiting bearing 30. The orbiting scroll 21 is orbitally driven via the crankpin 9A by rotation of the drive shaft 9.

The rear surface of the end plate 21A of the orbiting scroll 21 is supported by a thrust bearing 31 provided in the bearing member 6. A known rotation prevention mechanism 32 constituted of an Oldham link, a pin ring, or the like is provided between the rear surface of the end plate 21A of the orbiting scroll 21 and the bearing member 6. Rotation of the orbiting scroll 21 is prevented by the rotation prevention mechanism 32. The orbiting scroll 21 is orbitally driven with respect to the fixed scrolls 20.

A suction port 33, to which a suction pipe on the refrigerating cycle side is connected, is provided in the rear housing 3B. Low pressure gas suctioned into a suction cavity 34 through the suction port 33 is suctioned to the compression chambers 22 of the scroll compression mechanism 19 and is compressed.

In the present embodiment, the compression mechanism 19 is a so-called stepped scroll compression mechanism in which gas can be compressed not only in a circumferential direction but also in the axial line direction Da and can be compressed in a three-dimensional manner. A step portion changing a lap height in a spiral direction of the fixed scrolls 20 and the orbiting scroll 21 is provided in a stepped scroll compression mechanism and increases the lap height on the outer peripheral side with respect to the lap height on the inner peripheral side. However, the compression mechanism is not limited thereto.

The inside of the front housing 3A is filled with a lubricant of a required quantity. The lubricant is gathered in an oil reservoir 35 while a lower space inside the front housing 3A serves as the oil reservoir 35. Oil in the oil reservoir 35 is suctioned to an oil supply pump 37 via a suction passage 36. The oil supply pump 37 is a known rotary displacement pump.

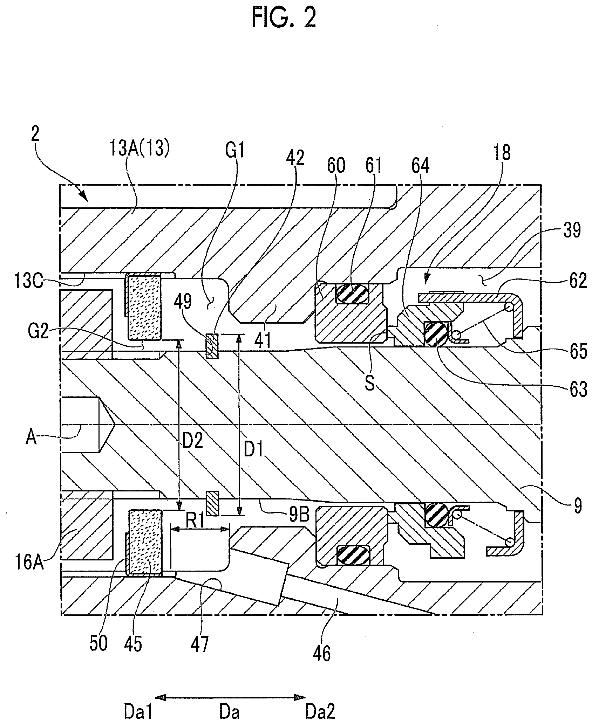

As illustrated in Fig. 2, one end portion of the drive shaft 9 is surrounded by the boss part main body 13A. The outer peripheral surface 9B of the drive shaft 9 and an inner peripheral surface 13C of the boss part main body 13A face each other in the radial direction.

A mechanical seal 18 is provided between the inner peripheral surface 13C of the boss part 13 and the outer peripheral surface 9B of the drive shaft 9. The one side Da1 of the mechanical seal 18 in the axial line direction abuts on a projection 41 formed on the inner peripheral surface 13C of the boss part 13 over the circumferential direction. That is, movement of the mechanical seal 18 to the one side Da1 in the axial line direction is regulated by the projection 41.

The mechanical seal 18 is a seal device which forms a liquid film on a sliding surface and seals a lubricant to be sealed while performing a lubricating operation with the lubricant. The mechanical seal 18 includes a mating ring 60 which is mounted on the boss part 13 side via an O-ring 61 in a non-rotational state, a seal ring 64 which is mounted on the drive shaft 9 side to be movable in the axial line direction via a case 62 and an O-ring 63 and integrally rotates with the drive shaft 9, and a coil spring 65 which is held by the case 62 and presses the seal ring 64 to the mating ring 60.

The mechanical seal 18 forms a sealed sliding portion S between the mating ring 60 which is a stationary side sliding ring and the seal ring 64 which is a rotational side sliding ring. The mechanical seal 18 prevents a lubricant inside a pump chamber 39 (which will be described below) from leaking out to the one side Da1 of the mechanical seal 18 in the axial line direction.

An oil discharge passage 46 is formed in a lower portion of the boss part 13. The oil discharge passage 46 is formed such that the inner peripheral surface 13C of the boss part main body 13A and an outer surface of the flange part 13B are connected to each other. An opening 47 increased in diameter to be greater than the oil discharge passage 46 is formed at a connection location between the oil discharge passage 46 and the inner peripheral surface 13C of the boss part main body 13A.

The opening 47 is open on the one side Da1 of the projection 41 in the axial line direction. The cross-sectional shapes of the opening 47 and the oil discharge passage 46 may be a circular shape or a polygonal shape.

An oil adsorbent material 48 is disposed on an outlet side of the oil discharge passage 46.

Oil which has been pumped up by the oil supply pump 37 from the oil reservoir 35 is ejected into the pump chamber 39 formed between the drive shaft 9, and the boss part 13 and the mechanical seal 18. A lubricant which has been pumped up to the pump chamber 39 is supplied to sliding parts such as the radial bearing portion 6A, the drive-bush 29, the orbiting bearing 30, and the thrust bearing 31, or a sliding part of the mechanical seal 18 through an oil supply passage (not illustrated) in a direction provided inside the drive shaft 9.

An annular plate 42 is attached to the one side Da1 of the mechanical seal 18 in the axial line direction, that is, the outer peripheral surface 9B of the drive shaft 9. The plate 42 is formed to protrude from the outer peripheral surface 9B of the drive shaft 9 to the outer side in the radial direction. A first gap G1 is formed between an outer peripheral edge of the plate 42 and the inner peripheral surface 13C of the boss part 13. That is, the one side Da1 of the plate 42 in the axial line direction and the other side Da2 of the plate 42 in the axial line direction communicate with each other via the first gap G1.

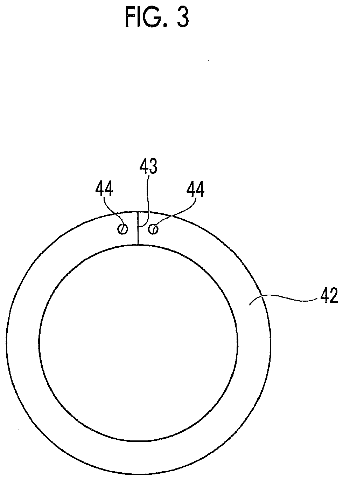

As illustrated in Fig. 3, the plate 42 is an annular plate having a cut part 43 formed in a part thereof. The plate 42 is fitted into a plate groove 49 formed on the outer peripheral surface 9B of the drive shaft 9 over the whole circumference in the circumferential direction. The plate 42 can be fitted into the plate groove 49 by slightly widening the plate 42 utilizing deformation of the plate 42. When the plate 42 is deformed, holes 44 formed on both sides of the cut part 43 of the plate 42 are utilized. That is, the plate 42 is formed as a snap ring.

For example, the plate 42 can be formed of metal, such as SUS304.

As illustrated in Fig. 2, an annular oil adsorbent material 45 is attached to the one side Da1 of the plate 42 in the axial line direction, that is, the inner peripheral surface 13C of the boss part 13.

The oil adsorbent material 45 has a rectangular shape in a cross section and is attached to the inner peripheral surface 13C of the boss part 13 via an annular bracket 50 having an L-shape in a cross section. As a material for forming the oil adsorbent material 45, for example, felt can be employed.

A second gap G2 is formed between the oil adsorbent material 45 and the outer peripheral surface 9B of the drive shaft 9. That is, the one side Da1 of oil adsorbent material 45 in the axial line direction and the other side Da2 of the oil adsorbent material 45 in the axial line direction communicate with each other via the second gap G2.

The plate 42 is provided between the mechanical seal 18 and the oil adsorbent material 45 in the axial line direction Da. More specifically, the position of the outer peripheral edge of the plate 42 in the axial line direction Da is closer to the other side Da2 in the axial line direction than an end portion of an open range R1 of the opening 47 on the one side Da1 in the axial line direction.

It is preferable that the position of the outer peripheral edge of the plate 42 in the axial line direction Da is within the range R1 in which the opening 47 is open.

The plate 42 and the oil adsorbent material 45 are formed such that an outer diameter D1 of the plate 42 becomes greater than an inner diameter D2 of the oil adsorbent material 45. That is, in a case where the one side Da1 in the axial line direction is seen from the other side Da2 of the plate 42 in the axial line direction, the plate 42 and the oil adsorbent material 45 are formed such that the end portion of the oil adsorbent material 45 on the inner side in the radial direction is hidden by the plate 42.

Next, operations of the open-type compressor 1 of the present embodiment will be described.

In the open-type compressor 1, if the electromagnetic clutch 11 is turned on, power is input from an external driving source via the rotor 11A (pulley 10). Input power is transmitted to the drive shaft 9, so that the drive shaft 9 is rotationally driven. Accordingly, the orbiting scroll 21 of the scroll compression mechanism 19 is orbitally driven around the fixed scroll 20. Due to this orbital driving, low pressure gas is suctioned into the suction cavity 34 from the suction port 33. The low pressure gas is compressed in the compression chamber 22. High pressure gas is ejected into the ejection cavity 26 via the ejection port 24 and is ejected to the refrigerating cycle from the discharge port 27.

Meanwhile, the oil supply pump 37 driven by rotation of the drive shaft 9 suctions a lubricant inside the oil reservoir 35 via the suction passage 36 and pumps the lubricant up to the pump chamber 39. The lubricant which has been pumped up into the pump chamber 39 is supplied to a sliding part of the mechanical seal 18, and sliding parts such as the radial bearing portion 6A, the drive-bush 29, the orbiting bearing 30, and the thrust bearing 31. The lubricant lubricates each of the sliding parts. Oil which has lubricated each of the sliding parts is gathered in the oil reservoir 35 which is a bottom portion of the housing 2 and is circulated again.

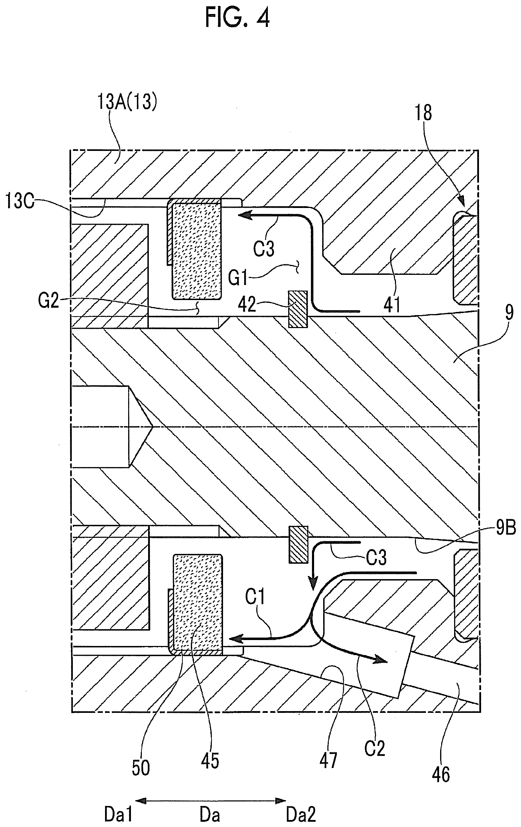

Next, with reference to Fig. 4, operations of the plate 42 and the oil adsorbent material 45 in the open-type compressor 1 of the present embodiment will be described.

A lubricant stored in the pump chamber 39 is sealed by the mechanical seal 18.

A lubricant, which has fallen due to the gravity in a lubricant which has leaked out from the mechanical seal 18 to the one side Da1 in the axial line direction, is adsorbed by the oil adsorbent material 45, as indicated in the passage C1, or is discharged by the oil discharge passage 46, as indicated in the passage C2.

On the other hand, in a case where a lubricant which has leaked out from the mechanical seal 18 to the one side Da1 in the axial line direction flows along the drive shaft 9 without falling due to the gravity, the lubricant is scattered on the outer side in the radial direction by the plate 42, as indicated in the passage C3. The lubricant is scattered from the plate 42 and adheres to the inner peripheral surface 13C of the boss part 13. Thereafter, the lubricant passes through the first gap G1 and is adsorbed by the oil adsorbent material 45. Alternatively, after being scattered from the plate 42, the lubricant passes through the first gap G1 and is directly adsorbed by the oil adsorbent material 45. That is, a lubricant which has leaked out from the mechanical seal 18 is adsorbed by the oil adsorbent material 45 without passing through the second gap G2.

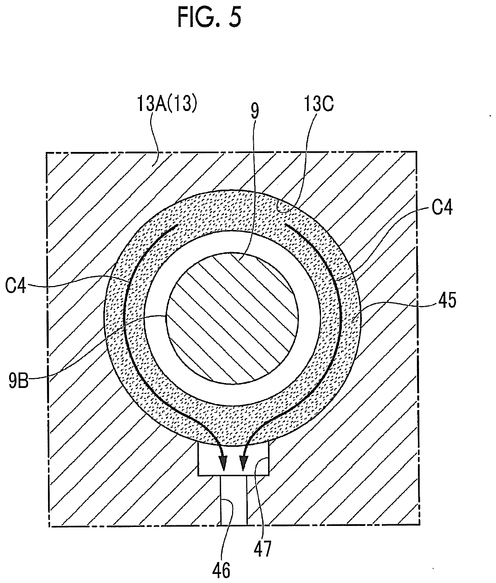

As illustrated in Fig. 5, a lubricant which has been scattered upper than the drive shaft 9 moves downward along the oil adsorbent material 45 (passage C4). That is, there is no chance for a lubricant above the drive shaft 9 to fall downward and adheres to the drive shaft 9.

According to the embodiment described above, it is possible to cause a lubricant, which has leaked out from the mechanical seal 18 and has flowed along the outer peripheral surface 9B of the drive shaft 9, to be scattered on the boss part 13 side by a centrifugal force of rotation of the drive shaft 9 and the plate 42 and to be adsorbed by the oil adsorbent material 45. Accordingly, a lubricant flowing along the outer peripheral surface 9B of the drive shaft 9 can be prevented from flowing out to the exterior, for example, from adhering to constituent components of the electromagnetic clutch 11.

In addition, since the outer diameter D1 of the plate 42 is formed to be greater than the inner diameter D2 of the oil adsorbent material, a lubricant which has been scattered by rotation of the drive shaft 9 and the plate 42 can be more reliably adsorbed by the oil adsorbent material 45.

In addition, since the position of the outer peripheral edge of the plate 42 is closer to the other side Da2 in the axial line direction than an end portion of the open range R1 of the opening 47 on the one side Da1 in the axial line direction, a lubricant can also be captured by the opening 47 and the oil discharge passage 46, in addition to the oil adsorbent material 45.

In addition, since the plate 42 has a form of a snap ring, the plate 42 can be easily attached to the drive shaft 9. In addition, the plate 42 can be manufactured at low cost.

The plate 42 of the embodiment has a structure in which the plate 42 is fitted into the plate groove 49 by utilizing the spring effect of the plate 42. However, the embodiment is not limited thereto. For example, the inner circumference of the plate 42 and the outer peripheral surface 9B of the drive shaft 9 may be bonded to each other by welding without forming a cut part in the plate 42.

### [Second Embodiment]

Hereinafter, an open-type compressor 1 of a second embodiment of the present invention will be described in detail with reference to the drawings. In the present embodiment, the differences between the present embodiment and the first embodiment described above are mainly described, and description of similar parts is omitted.

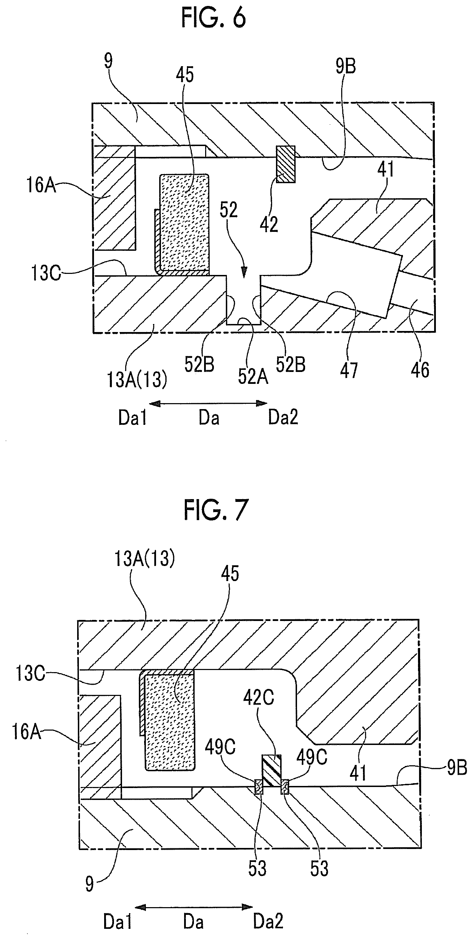

As illustrated in Fig. 6, a slit 52 is formed on the inner peripheral surface 13C of the boss part main body 13A of the present embodiment.

The slit 52 is a recessed groove formed in the lower portion of the boss part main body 13A to extend in the circumferential direction. The slit 52 has a cylindrical bottom surface 52A having a diameter greater than the inner diameter of the inner peripheral surface 13C of the boss part main body 13A, and a pair of side surfaces 52B connecting both end sides of the bottom surface 52A in the axial line direction Da and the inner peripheral surface 13C of the boss part main body 13A to each other.

The slit 52 is formed in the axial line direction Da to overlap the end portion of the opening 47 on the one side Da1 in the axial line direction. In other words, the slit 52 is formed such that the side surface 52B of the slit 52 on the other side Da2 in the axial line direction passes through the opening 47. Accordingly, the internal space of the slit 52 communicates with the opening 47.

According to the embodiment described above, a lubricant which has been scattered by rotation of the drive shaft 9 and the plate 42 is captured by the slit 52 and then flows into the opening 47. Accordingly, more lubricants can be captured.

### [Third Embodiment]

Hereinafter, an open-type compressor 1 of a third embodiment of the present invention will be described in detail with reference to the drawings. In the present embodiment, the differences between the present embodiment and the first embodiment described above are mainly described, and description of similar parts is omitted.

As illustrated in Fig. 7, for example, a plate 42C of the present embodiment is formed of resin, such as polyacetal resin (POM). In addition, the plate 42C of the present embodiment is fixed by a pair of snap rings 53. As the pair of snap rings 53, general C-type snap rings can be utilized. The snap ring 53 is fitted into a plate groove 49C which is formed on the outer peripheral surface 9B of the drive shaft 9 over the whole circumference in the circumferential direction.

According to the embodiment described above, the plate 42C can be manufactured at lower cost.

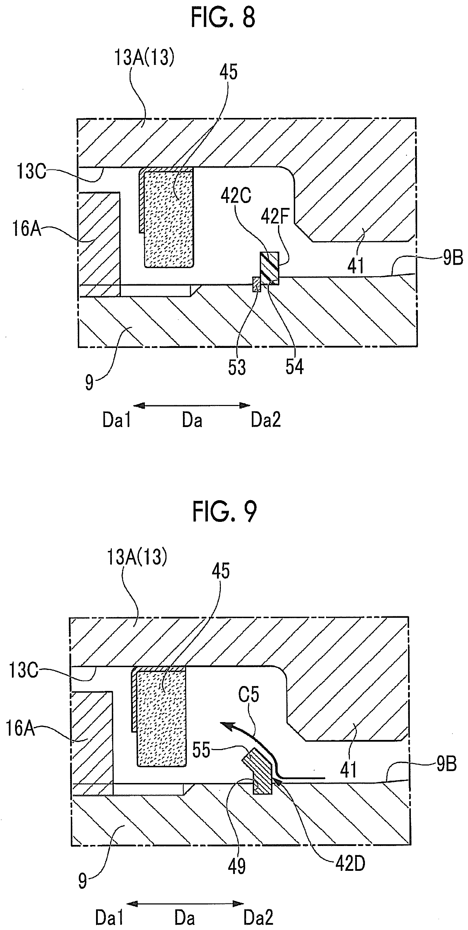

In the embodiment, the plate 42C has a structure of being fixed by the pair of snap rings 53. However, the embodiment is not limited thereto. For example, as illustrated in Fig. 8, a step having an end surface 54 toward the one side Da1 in the axial line direction may be formed on the outer peripheral surface 9B of the drive shaft 9, such that a surface 42F facing the other side Da2 of the plate 42C in the axial line direction abuts on the end surface 54 of the step. Due to such a form, the plate 42C can be more easily attached.

### [Fourth Embodiment]

Hereinafter, an open-type compressor 1 of a fourth embodiment of the present invention will be described in detail with reference to the drawings. In the present embodiment, the differences between the present embodiment and the first embodiment described above are mainly described, and description of similar parts is omitted.

As illustrated in Fig. 9, in a plate 42D of the present embodiment, a part in the vicinity of the outer peripheral edge is inclined toward the one side Da1 in the axial line direction. That is, in the plate 42D of the present embodiment, only a part in the vicinity of the outer peripheral edge of the plate 42D is partially bent. A bent portion 55 inclined toward the one side Da1 in the axial line direction is formed in a part in the vicinity of the outer peripheral edge of the plate 42D.

According to the embodiment described above, a lubricant flowing along the outer peripheral surface 9B of the drive shaft 9 and then flowing along a surface facing the other side Da2 of the plate 42D in the axial line direction due to a centrifugal force is likely to be scattered toward the oil adsorbent material 45 disposed on the one side Da1 of the plate 42D in the axial line direction, as indicated in a passage C5.

### [Fifth Embodiment]

Hereinafter, an open-type compressor 1 of a fifth embodiment of the present invention will be described in detail with reference to the drawings. In the present embodiment, the differences between the present embodiment and the first embodiment described above are mainly described, and description of similar parts is omitted.

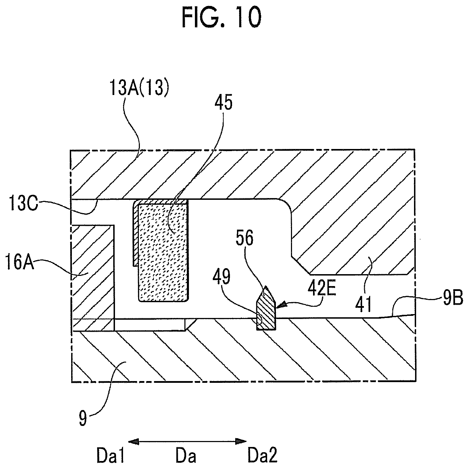

As illustrated in Fig. 10, in a plate 42E of the present embodiment, an edged part 56 thinned toward the outer side in the radial direction is formed. In other words, a part in the vicinity of the outer peripheral edge of the plate 42E of the present embodiment is formed to have a width in the axial line direction Da reduced toward the outer side in the radial direction, and a tip thereof on the outer side in the radial direction is sharpened.

According to the embodiment described above, a lubricant flowing along the outer peripheral surface 9B of the drive shaft 9 and then flowing along a surface facing the other side Da2 of the plate 42E in the axial line direction due to a centrifugal force is more likely to be scattered from the plate 42E.

Hereinabove, the embodiments of the present invention have been described in detail. Various changes can be added within a range not departing from the scope of the appended claims.

For example, in the embodiment, as an example of an open-type compressor, an example applied to a scroll-type compressor has been described. However, the embodiment may be applied to open-type compressors of different types, for example, a rotary type, a swash plate type, and a reciprocating type, in a similar manner.

### Industrial Applicability

According to the present invention, oil leaking out from a seal device and flowing along an outer peripheral surface of a drive shaft can be scattered on a boss part side due to a centrifugal force of rotation of the drive shaft and a plate and then can be adsorbed by an oil adsorbent material. Accordingly, oil flowing along the outer peripheral surface of the drive shaft can be prevented from flowing to the exterior.

### Reference Signs List

- 1: open-type compressor
- 2: housing
- 3: housing main body
- 3A: front housing
- 3B: rear housing
- 5, 7, 12, 17, 23: bolt
- 6: bearing member
- 6A: radial bearing portion
- 8: first antifriction bearing
- 9: drive shaft
- 9A: crankpin
- 9B: outer peripheral surface
- 10: pulley
- 11: electromagnetic clutch
- 11A: rotor
- 13: boss part
- 13A: boss part main body
- 13B: flange part
- 13C: inner peripheral surface
- 14: second antifriction bearing
- 15: electromagnetic coil unit
- 16: armature
- 16A: hub
- 16B: armature plate
- 16C: leaf spring
- 18: mechanical seal (seal device)
- 19: compression mechanism
- 20: fixed scroll
- 21: orbiting scroll
- 22: compression chamber
- 24: ejection port
- 25: ejection valve
- 26: ejection cavity
- 27: discharge port
- 29: drive-bush
- 30: orbiting bearing
- 31: thrust bearing
- 32: rotation prevention mechanism
- 33: suction port
- 34: suction cavity
- 35: oil reservoir
- 36: suction passage
- 37: oil supply pump
- 39: pump chamber
- 41: projection
- 42, 42C, 42D, 42E: plate
- 43: cut part
- 45: oil adsorbent material
- 46: oil discharge passage
- 47: opening
- 48: oil adsorbent material
- 49: plate groove
- 52: slit
- 53: snap ring
- 54: end surface
- 55: bent portion
- 56: edged part
- A: axial line
- G1: first gap
- G2: second gap
- Da: axial line direction
- Da1: one side in axial line direction
- Da2: the other side in axial line direction

## Claims

1. An open-type compressor comprising:
a housing (2) which has a housing main body (3) and a boss part (13) integrally attached to the housing main body (3);
a compression mechanism (19) which is housed in the housing main body (3);
a drive shaft (9) which is coupled to the compression mechanism (19), of which an end portion on one side (Dal) in an axial line direction (Da) along which an axial line (A) of the drive shaft (9) extends, protrudes to exterior of the housing main body (3), and of which the end portion is surrounded by the boss part (3);
a seal device (18) which seals a gap between the housing (2) and the drive shaft (9);
an annular plate (42) which is provided on an outer peripheral surface (9B) of the drive shaft (9) on one side (Dal) of the seal device (18) in the axial line direction (Da) and has a first gap (G1) between the plate (42) and an inner peripheral surface (13C) of the boss part (13) facing the drive shaft (9); and
an annular oil adsorbent material (45) which is provided on the inner peripheral surface (13C) of the boss part (13) on one side (Dal) of the plate (42) in the axial line direction (Da) and has a second gap (G2) between the oil adsorbent material (45) and the outer peripheral surface (9B) of the drive shaft (9),
**characterized in that** the annular oil adsorbent material (45) is attached to the one side (Dal) with respect to the annular plate (42) in the axial line direction (Da).

2. The open-type compressor according to Claim 1,
wherein an outer diameter (D1) of the plate (42) is greater than an inner diameter (D2) of the oil adsorbent material (45).

3. The open-type compressor according to Claim 1 or 2,
wherein the open-type compressor has an oil discharge passage (46) provided in the boss part (13), and an opening (47) connecting the oil discharge passage (46) and the inner peripheral surface (13C) of the boss part (13) to each other, and
wherein a position of an outer peripheral edge of the plate (42) in the axial line direction (Da) of the drive shaft (9) is closer to the other side (Da2) in the axial line direction (Da) than an end portion of an open range (R1) of the opening (47) on one side (Dal) in the axial line direction (Da).

4. The open-type compressor according to Claim 3,
wherein the position of the outer peripheral edge of the plate (42) in the axial line direction (Da) of the drive shaft (9) is within the open range (R1) of the opening (47).

5. The open-type compressor according to Claim 3 or 4,
wherein the inner peripheral surface (13C) of the boss part (13) has a slit (52) extending in a circumferential direction, and
wherein an internal space of the slit (52) communicates with the opening (47).

6. The open-type compressor according to any one of Claims 1 to 5,
wherein a part in the vicinity of an outer peripheral edge of the plate (42) on an outer side in a radial direction is inclined toward the oil adsorbent material (45).

7. The open-type compressor according to any one of Claims 1 to 4,
wherein the plate (42) is a snap ring (53) which is capable of being fitted into a plate groove (49C) formed on the outer peripheral surface (9B) of the drive shaft (9) .

## Patentansprüche

1. Offener Verdichter, der Folgendes umfasst:
ein Gehäuse (2) mit einem Gehäusehauptkörper (3) und einem erhabenen Teil (13), der integral am Gehäusehauptkörper (3) befestigt ist;
einen Verdichtungsmechanismus (19), der im Gehäusehauptkörper (3) untergebracht ist;
eine Antriebswelle (9), die an den Verdichtungsmechanismus (19) gekoppelt ist und von der ein Endabschnitt auf einer Seite (Dal) in einer Axiallinienrichtung (Da), entlang der sich eine Axiallinie (A) der Antriebswelle (9) erstreckt, nach außerhalb des Gehäusehauptkörpers (3) vorsteht und von der der Endabschnitt vom erhabenen Teil (3) umgeben ist;
eine Dichtungsvorrichtung (18), die einen Spalt zwischen dem Gehäuse (2) und der Antriebswelle (9) abdichtet;
eine ringförmige Platte (42), die auf einer Seite (Dal) der Dichtungsvorrichtung (18) in der Axiallinienrichtung (Da) auf einer Außenperipheriefläche (9B) der Antriebswelle (9) bereitgestellt ist und zwischen der Platte (42) und einer Innenperipheriefläche (13C) des erhabenen Teils (13), die der Antriebswelle (9) zugewandt ist, einen ersten Spalt (G1) aufweist; und
ein ringförmiges ölabsorbierendes Material (45), das auf einer Seite (Dal) der Platte (42) in der Axiallinienrichtung (Da) auf der Innenperipheriefläche (13C) des erhabenen Teils (13) bereitgestellt ist und zwischen dem ölabsorbierenden Material (45) und der Außenperipheriefläche (9B) der Antriebswelle (9) einen zweiten Spalt (G2) aufweist,
**dadurch gekennzeichnet, dass** das ringförmige ölabsorbierende Material (45) mit Bezug auf die ringförmige Platte (42) in der Axiallinienrichtung (Da) an der einen Seite (Dal) befestigt ist.

2. Offener Verdichter nach Anspruch 1,
wobei ein Außendurchmesser (D1) der Platte (42) größer als ein Innendurchmesser (D2) des ölabsorbierenden Materials (45) ist.

3. Offener Verdichter nach Anspruch 1 oder 2,
wobei der offene Verdichter einen Ölableitkanal (46), der im erhabenen Teil (13) bereitgestellt ist, und eine Öffnung (47), die den Ölableitkanal (46) und die Innenperipheriefläche (13C) des erhabenen Teils (13) miteinander verbindet, aufweist, und
wobei eine Position einer Außenperipheriekante der Platte (42) in der Axiallinienrichtung (Da) der Antriebswelle (9) in der Axiallinienrichtung (Da) der anderen Seite (Da2) näher ist als ein Endabschnitt eines offenen Bereichs (R1) der Öffnung (47) auf einer Seite (Dal) in der Axiallinienrichtung (Da).

4. Offener Verdichter nach Anspruch 3,
wobei die Position der Außenperipheriekante der Platte (42) in der Axiallinienrichtung (Da) der Antriebswelle (9) innerhalb des offenen Bereichs (R1) der Öffnung (47) liegt.

5. Offener Verdichter nach Anspruch 3 oder 4,
wobei die Innenperipheriefläche (13C) des erhabenen Teils (13) einen Schlitz (52) aufweist, der sich in eine Umfangsrichtung erstreckt, und
wobei ein Innenraum des Schlitzes (52) mit der Öffnung (47) kommuniziert.

6. Offener Verdichter nach einem der Ansprüche 1 bis 5,
wobei ein Teil in der Nähe einer Außenperipheriekante der Platte (42) auf einer Außenseite in einer Radialrichtung zum ölabsorbierenden Material (45) geneigt ist.

7. Offener Verdichter nach einem der Ansprüche 1 bis 4,
wobei die Platte (42) ein Sprengring (53) ist, der in eine Plattennut (49C), die auf der Außenperipheriefläche (9B) der Antriebswelle (9) gebildet ist, eingesetzt zu werden kann.

## Revendications

1. Compresseur de type ouvert comprenant :
un boîtier (2) qui a un corps principal de boîtier (3) et une partie de bossage (13) fixée intégralement au corps principal de boîtier (3) ;
un mécanisme de compression (19) qui est logé dans le corps principal de boîtier (3) ;
un arbre d'entraînement (9) qui est couplé au mécanisme de compression (19) dont une partie d'extrémité, sur un côté (Dal) dans une direction de ligne axiale (Da) le long de laquelle une ligne axiale (A) de l'arbre d'entraînement (9) s'étend, fait saillie à l'extérieur du corps principal de boîtier (3) et dont la partie d'extrémité est entourée par la partie de bossage (3) ;
un dispositif d'étanchéité (18) qui comble un espace entre le boîtier (2) et l'arbre d'entraînement (9) ;
une plaque annulaire (42) qui est prévue sur une surface périphérique externe (9B) de l'arbre d'entraînement (9) sur un côté (Dal) du dispositif d'étanchéité (18) dans la direction de ligne axiale (Da) et a un premier espace (G1) entre la plaque (42) et une surface périphérique interne (13C) de la partie de bossage (13) faisant face à l'arbre d'entraînement (9) ; et
un matériau adsorbant d'huile annulaire (45) qui est prévu sur une surface périphérique interne (13C) de la partie de bossage (13) sur un côté (Dal) de la plaque (42) dans la direction de ligne axiale (Da) et a un second espace (G2) entre le matériau adsorbant d'huile (45) et la surface périphérique externe (9B) de l'arbre d'entraînement (9),
**caractérisé en ce que** le matériau adsorbant d'huile annulaire (45) est fixé sur le côté (Da1) par rapport à la plaque annulaire (42) dans la direction de ligne axiale (Da).

2. Compresseur de type ouvert selon la revendication 1,
dans lequel un diamètre externe (D1) de la plaque (42) est supérieur à un diamètre interne (D2) du matériau adsorbant d'huile (45).

3. Compresseur de type ouvert selon la revendication 1 ou 2,
dans lequel le compresseur de type ouvert a un passage de décharge d'huile (46) prévu dans la partie de bossage (13) et une ouverture (47) raccordant le passage de décharge d'huile (46) et la surface périphérique interne (13C) de la partie de bossage (13) entre eux, et
dans lequel une position d'un bord périphérique externe de la plaque (42) dans la direction de ligne axiale (Da) de l'arbre d'entraînement (9) est plus proche de l'autre côté (Da2) dans la direction de ligne axiale (Da) qu'une partie d'extrémité d'une plage ouverte (R1) de l'ouverture (47) sur un côté (Dal) dans la direction de ligne axiale (Da).

4. Compresseur de type ouvert selon la revendication 3,
dans lequel la position du bord périphérique externe de la plaque (42) dans la direction de ligne axiale (Da) de l'arbre d'entraînement (9) est dans la plage ouverte (R1) de l'ouverture (47).

5. Compresseur de type ouvert selon la revendication 3 ou 4,
dans lequel la surface périphérique interne (13C) de la partie de bossage (13) a une fente (52) s'étendant dans une direction circonférentielle, et
dans lequel un espace interne de la fente (52) communique avec l'ouverture (47).

6. Compresseur de type ouvert selon l'une quelconque des revendications 1 à 5,
dans lequel une partie, au voisinage d'un bord périphérique externe de la plaque (42) sur un côté externe dans une direction radiale, est inclinée vers le matériau adsorbant d'huile (45).

7. Compresseur de type ouvert selon l'une quelconque des revendications 1 à 4,
dans lequel la plaque (42) est un anneau de clipsage (53) qui peut être monté dans une rainure de plaque (49C) formée sur la surface périphérique externe (9B) de l'arbre d'entraînement (9).
